# EUROPÄISCHE PATENTSCHRIFT

(11) **EP 2 418 069 B1**
(45) Veröffentlichungstag und Bekanntmachung des Hinweises auf die Patenterteilung: **27.09.2017**
(21) Anmeldenummer: 11176219.1
(22) Anmeldetag: 02.08.2011
(51) Int. Cl.: B29C 49/42, B29C 33/30, B29C 49/48

(54) **Blasformanordnung**
Blow moulding assembly
Dispositif de moulage par soufflage

(30) Priorität: 09.08.2010 DE 102010033803
(43) Veröffentlichungstag der Anmeldung: 15.02.2012
(73) Patentinhaber: KRONES AG, 93073 Neutraubling (DE)
(72) Erfinder: Dorrmann, Bernhard, 93086 Wörth (DE)
(74) Vertreter: Bittner, Bernhard

(56) Entgegenhaltungen:
- WO-A1-2005/042231
- DE-A1- 10 152 050
- DE-A1-102005 035 233
- US-A1- 2005 013 891
- US-A1- 2006 275 525
- US-A1- 2008 181 982
- US-A1- 2008 311 239

## Beschreibung

Die vorliegende Erfindung bezieht sich auf eine Blasformanordnung zur Herstellung von Kunststoffbehältnissen. Derartige Blasformanordnungen sind aus dem Stand der Technik seit langem bekannt. Diese Blasformanordnungen sind dabei Bestandteil von Blasstationen, innerhalb derer Kunststoffvorformlinge zu Kunststoffbehältnissen expandiert werden. Zu diesem Zweck weisen diese Blasformanordnungen üblicher Weise eine Blasform auf, deren Innenwandung an die Kontur des herzustellenden Behältnisses angepasst ist. Mittels Luftdruck werden die Vorformlinge zu Kunststoffbehältnissen expandiert.

Die Blasformen sind dabei auswechselbar in Blasformträgern bzw. Mutterformen angeordnet. Im Falle eines Verschleißes dieser Blasformen, aber auch, wenn eine Umstellung auf andere Behältnistypen vorgenommen werden soll, werden dabei die besagten Blasformen von den Blasformträgern abgenommen und durch andere Blasformen ersetzt. Dieser Austausch der Blasformen ist im Stand der Technik eine relativ aufwendige Prozedur. So werden zunächst mehrere Befestigungsschrauben gelöst und anschließend Klauen bzw. Verriegelungsbügel verschwenkt, um die Blasform freizugeben. Auch der Wiedereinbau einer Blasform ist relativ aufwendig. Teilweise behindern die Verriegelungsbügel beim Einbau das zuvor zu erfolgende Einsetzen der Blasformen in den Formträger bzw. die Mutterform und/oder die Formschale.

Die vorliegende Erfindung wird primär unter Bezugnahme auf die Anordnung bzw. Befestigung einer Blasform an einer Formträgerschale beschrieben, es wird jedoch darauf hingewiesen, dass die Erfindung auch auf die Anordnung einer Blasform an einer Mutterform, die Anordnung einer Mutterform an einer Formträgerschale oder einem Blasformträger, oder auch die Anordnung einer Formträgerschale oder Mutterform an einem Blasformträger anwendbar ist. Daher wird im Folgenden neben den Begriffen Mutterform, Blasformträger oder Blasformschale auch der Begriff Blasformhalter verwendet, der sowohl eine Mutterform, eine Blasformschale als auch einen Blasformträger bezeichnen kann. Der Begriff Blasformhalter bezeichnet daher in diesem Zusammenhang ein Element, welches ein weiteres Element zumindest teilweise aufnimmt, d.h. der Blasformhalter ist insbesondere ein ein weiteres Element aufnehmendes Element.

Weiterhin wird neben den Begriffen Blasform, Mutterform bzw. Formträgerschale auch der Begriff Blasformeinheit verwendet, der sowohl die Blasform als auch die Mutterform, als auch die Blasformschale, bezeichnen kann, welche jeweils einen Hohlraum ausbilden, der zur Expansion des Kunststoffvorformlings dient. Im Falle der Mutterform bzw. der Blasformschale dient der Hohlraum zur Aufnahme einer Blasform und damit mittelbar zur Expansion des Kunststoffvorformlings. Damit handelt es sich bei der Blasformeinheit insbesondere um ein aufgenommenes Element, genauer um ein radial innerhalb des Blasformhalters angeordnetes und von diesem Blasformhalter aufgenommenes Element.

Die DE 10 2005 035 233 A1 beschreibt eine Vorrichtung zur Halterung von Blasformsegmenten. Dabei ist ein Arretierelement vorgesehen, welches sowohl zur Bereitstellung einer formschlüssigen Halterung als auch zur Bereitstellung einer kraftschlüssigen Halterung des Blasformsegmentes ausgebildet ist. Genauer gesagt, ist hier ein Hebel vorgesehen, mittels dem ein Arretierelement verschoben werden kann, um die Arretierung einer Blasform freizugeben. Doch auch diese Vorrichtung kann gegebenenfalls beim Einsetzen von Blasformsegmenten hinderlich sein.

Die US 6,615472 B2 beschreibt eine Schnellwechsel-Blasformanordnung. Auch diese Anordnung weist eine Trägerplatte und eine Blasformhälfte auf, die an die Trägerplatte befestigt werden kann. Die US-A-2006275525 offenbart, in Kombination, alle Merkmale des Oberbegriffs des Anspruchs 1. Der vorliegenden Erfindung liegt daher die Aufgabe zugrunde, die Montage und Demontage von derartigen Blasformeinheiten gegenüber den Blasformhaltern zu vereinfachen. Dies wird erfindungsgemäß durch eine Blasformanordnung nach Anspruch erreicht. Vorteilhafte Ausführungsformen und Weiterbildungen sind Gegenstand der Unteransprüche.

Eine Blasformanordnung zum Umformen von Kunststoffvorformlingen zu Kunststoffbehältnissen weist eine (insbesondere von einem weiteren Element aufgenommene) Blasformeinheit auf, welche einen Hohlraum ausbildet, innerhalb dessen die Kunststoffvorformlinge zu Kunststoffbehältnissen ausgebildet werden bzw. der zur Expansion der Kunststoffvorformlinge dient, wobei die Blasformeinheit wenigstens zweiteilig ausgebildet ist. Weiterhin weist die Anordnung einen Blasformhalter zur Aufnahme der Blasformeinheit auf, wobei der Blasformhalter wenigstens zwei Formhalterelemente zur Aufnahme von Teilen der Blasform aufweist. Weiterhin ist ein Verriegelungsmechanismus vorgesehen, um wenigstens einen Teil der Blasformeinheit gegenüber wenigstens einem Formhalterelement zu arretieren. Dabei weist der Verriegelungsmechanismus ein Eingriffselement auf, welches in einem arretierten Zustand eines Teils der Blasformeinheit gegenüber einem Formhalterelement auf einen Abschnitt des Teils der Blasformeinheit eine Kraft zum Halten des Teils der Blasformeinheit gegenüber dem Formhalterelement ausübt.

Dabei weist der Verriegelungsmechanismus ein Betätigungselement auf, um eine Arretierung zwischen dem Formhalterelement und der Blasformeinheit bzw. dem Teil der Blasformeinheit zu lösen.

Erfindungsgemäß ist eine Lage bzw. Position des Eingriffselements in einer ersten Stellung des Betätigungselements arretiert. Weiterhin ist die Lage des Eingriffselements in einer zweiten Stellung des Betätigungselements änderbar und das Eingriffselement zwischen dem Betätigungselement und der Blasformeinheit angeordnet ist. Dies bedeutet insbesondere, dass in einer Stellung des Betätigungselements, in der die Blasform an dem Träger arretiert ist, auch das Eingriffselement hinsichtlich seiner Funktion bzw. Stellung fixiert ist. Vorzugsweise ist dabei die Lage des Eingriffselements durch eine Kraftausübung des Betätigungselements fixiert. In der zweiten Stellung des Betätigungselements, insbesondere einer Öffnungsstellung, ist die Lage des Eingriffselements änderbar, d. h. insbesondere, dass das Eingriffselement hier selbst bewegbar ist. Vorteilhaft kann in der zweiten Stellung des Betätigungselements das Eingriffselement beispielsweise gedreht werden, sodass ein Entfernen der Blasformeinheit von dem Formhalterelement möglich ist. Vorteilhaft sind das Eingriffselement und das Betätigungselement als voneinander separate Bauteile ausgeführt. Vorteilhaft ist es auch denkbar, dass das Eingriffselement und das Betätigungselement unabhängig voneinander bewegbar sind.

Vorteilhaft ist in der zweiten Stellung des Betätigungselements die Blasformeinheit von dem Formhalterelement lösbar. So ist es möglich, dass die Blasformeinheit in der besagten zweiten Stellung des Betätigungselements aus dem Formhalterelement herausnehmbar, bevorzugt heraus drehbar ist. Erfindungsgemäß ist das Eingriffselement zwischen dem Betätigungselement bzw. einem Teil des Betätigungselements und der Blasformeinheit angeordnet. Vorteilhaft kann durch ein Betätigungselement das Eingriffselement an die Blasformeinheit angedrückt werden, um diese gegenüber dem Formträger zu arretieren. So kann das Betätigungselement bezüglich seiner Schwenkachse eine exzentrische Gestalt aufweisen, so dass durch diese exzentrische Gestalt bei einer Bewegung des Betätigungselements eine Verriegelung bzw. Entriegelung durchgeführt werden kann.

Vorteilhaft sind weiterhin das Eingriffselement und das Betätigungselement als zwei verschiedene Teile ausgebildet, die bevorzugt allerdings direkt nebeneinander angeordnet sind. Bei einer weiteren vorteilhaften Ausführungsform ist das Eingriffselement bezüglich einer vorgegebenen Schwenkachse drehbar. Bei einer weiteren vorteilhaften Ausführungsform ist das Eingriffselement in der zweiten Stellung des Betätigungselements gemeinsam mit diesem schwenkbar. Auf diese Weise kann der Demontagevorgang vereinfacht werden, da das Betätigungselement auch zum Wegschwenken des Eingriffselements verwendet werden kann.

Bei einer weiteren vorteilhaften Ausführungsform ist das Betätigungselement um eine vorgegebene Schwenkachse schwenkbar. Das Betätigungselement kann dabei beispielsweise als Hebelelement ausgeführt sein, welches um eine vorgegebene Schwenkachse schwenkbar ist. Vorteilhaft weicht die Richtung der Schwenkachse, um welche das Betätigungselement schwenkbar ist, von derjenigen Schwenkachse, um welche das Eingriffselement schwenkbar ist, ab. Es wäre jedoch auch möglich, dass zumindest Bestandteile des Betätigungselements um zwei Schwenkachsen schwenkbar sind, wobei beispielsweise in einem geöffneten Zustand des Betätigungselements dieses auch gemeinsam mit dem Eingriffselement schwenkbar sein kann.

Vorteilhaft ist die Schwenkachse des Betätigungselements, bezüglich derer das Betätigungselement zum Öffnen oder Schließen der Blasformanordnung geschwenkt wird, geometrisch senkrecht zu der Schwenkachse, um welche das Eingriffselement geschwenkt wird.

Bei einer weiteren vorteilhaften Ausführungsform weist das Betätigungselement einen (insbesondere bezüglich einer Schwenkachse des Betätigungselements) exzentrisch ausgebildeten Kontaktabschnitt auf. Dieser Kontaktabschnitt wirkt dabei bevorzugt zumindest mittelbar auf das Eingriffselement, so dass durch ein Schwenken des Betätigungselements um die besagte Achse ein Arretieren bzw. Lösen des Eingriffselements erreicht werden kann. Dies wird unter Bezugnahme auf die Figuren genauer erläutert.

Vorzugsweise handelt es sich bei der Blasformeinheit um eine Blasform, die unmittelbar den Hohlraum zur Expansion des Vorformlings ausbildet. Vorteilhaft handelt es sich bei dem Blasformhalter um eine Blasformschale, welche die Blasform unmittelbar aufnimmt. Bevorzugt handelt es sich bei einer Bewegung des Eingriffselements und besonders bevorzugt auch des Betätigungselements um eine Schwenk- bzw. Drehbewegung um die vorgegebene Achse, wobei besonders bevorzugt ausschließlich eine derartige Schwenk- bzw. Drehbewegung und keine zusätzliche Verschiebebewegung vorgesehen ist.

Dabei ist es möglich, dass das Eingriffselement in einer Ebene schwenkbar ist, welche parallel ist zu einer Trennebene, welche die beiden Blasformhälften bzw. auch die Formhalterhälften voneinander trennt. Es wäre jedoch auch möglich, dass das Eingriffselement um eine Achse schwenkbar ist, welche parallel zu einer Längsrichtung der umzuformenden Behältnisse verläuft.

Bei einer weiteren vorteilhaften Ausführungsform ist ein maximaler Drehwinkel des Eingriffselementes geringer als 360°, bevorzugt geringer als 180°, bevorzugt geringer als 100° und bevorzugt geringer als 90°. Durch diese Ausführungsform kann erreicht werden, dass das Eingriffselement nur um genau definierte Winkel drehbar ist, und daher können Behinderungen durch dieses Eingriffselement beim Wiedereinbau von weiteren Blasformsegmenten verhindert werden. Weiterhin ergeben sich auf diese Weise sehr genau definierte Drehstellungen für die Eingriffselemente. Vorteilhaft ist jedenfalls keine Volldrehung des Eingriffselements möglich.

Bei einer weiteren vorteilhaften Ausführungsform ist das Eingriffselement an einem Träger angeordnet, und dieser Träger ist an dem Blasformhalter angeordnet. Dabei ist es möglich, dass der Träger ein streifenartiges Element ist, welches beispielsweise mit Schraubverbindungen fest, jedoch lösbar, an dem Blasformhalter angeordnet ist. An diesem Träger wiederum sind die besagten Eingriffselemente drehbar angeordnet.

Bei einer weiteren vorteilhaften Ausführungsform weist der Verriegelungsmechanismus wenigstens zwei Eingriffselemente auf, die in einer Längsrichtung der Blasformeinheit hintereinander angeordnet sind. Dies bedeutet, dass die Blasformeinheit entlang ihrer Längsrichtung an wenigstens zwei Positionen gegenüber dem Blasformhalter stabilisiert bzw. arretiert ist.

Bei einer weiteren vorteilhaften Ausführungsform weist der Verriegelungsmechanismus wenigstens zwei Eingriffselemente auf, und die Blasformeinheit ist zumindest teilweise zwischen diesen Eingriffselementen angeordnet. Dies bedeutet, dass die Blasformeinheit beidseitig bezüglich des Hohlraums bzw. bezüglich des zu expandierenden Behältnisses gegenüber dem Blasformhalter jeweils von drehbaren Eingriffselementen arretiert ist. Es wäre jedoch auch möglich, dass die Blasformeinheit an einer Seite ohne (drehbare) Eingriffselemente beispielsweise eingehängt wird, und drehbare Eingriffselemente lediglich an der anderen Seite vorgesehen sind.

Vorzugsweise weist die Blasformeinheit Ausnehmungen bzw. Aussparungen auf, in welche die Eingriffelemente eingreifen.

Bei einer weiteren vorteilhaften Ausführungsform rastet wenigstens ein Eingriffselement in wenigstens einer Drehstellung ein. Vorteilhaft rastet das Eingriffselement in genau zwei Drehstellungen ein, wobei es sich hierbei um eine geöffnete und um eine geschlossene Stellung handelt. Auf diese Weise können bei einer Demontage der Blasformeinheit die einzelnen Eingriffseinrichtungen jeweils in die Öffnungsstellung gedreht werden und rasten in dieser Stellung ein. Bei einem Einsetzen einer weiteren Blasformeinheit behindern alsdann diese Eingriffselemente den Einsetzvorgang nicht. Weiterhin sind auf diese Weise die Arretierungsstellungen der Eingriffselemente genau definiert.

Bei einer weiteren vorteilhaften Ausführungsform ist das Eingriffselement mittels wenigstens zwei Kugelkörpern drehbar gelagert. Vorzugsweise sind drei derartige Kugelkörper vorgesehen, welche zwischen dem Eingriffselement und dem Blasformhalter bzw. zwischen dem Eingriffselement und dem Träger angeordnet sind. Über diese drei Kugelkörper wird das Eingriffselement definiert abgestützt. Anstelle von Kugelkörpern könnten auch zylinder- oder kegelförmige Körper vorgesehen sein.

Weiterhin sind die besagten Kugelkörper vorteilhaft in Laufbahnen angeordnet. Auf diese Weise wird eine sehr einfach definierte Drehung des Eingriffselementes erreicht. Außerdem können über die besagten Laufbahnen auch die beiden Raststellungen des Eingriffselementes gegenüber dem Blasformhalter bzw. gegenüber dem o. g. Träger definiert werden.

Bei einer weiteren vorteilhaften Ausführungsform weist das Eingriffselement wenigstens eine abgerundete Außenfläche auf. Vorteilhaft ist diese abgerundete Außenfläche an einem Ende des Eingriffselementes vorgesehen, welches einem Eingriffsbereich, mit dem das Eingriffselement in einem arretierten Zustand die Blasformeinheit kontaktiert, gegenüberliegt. Diese abgerundete Außenfläche erlaubt eine (insbesondere begrenzte) Drehbewegung des Eingriffselementes gegenüber dem Blasformhalter.

Bei einer weiteren vorteilhaften Ausführungsform weist die Blasformanordnung eine Federeinrichtung auf, um das Eingriffselement gegenüber dem Träger bzw. dem Blasformträger vorzuspannen. Dabei ist es beispielsweise möglich, dass dieses Federelement unterhalb des genannten Trägers angeordnet ist, und das Eingriffselement auf den Träger zuzieht. Dabei werden insbesondere auch die oben erwähnten Kugelkörper durch das besagte Federelement eingeklemmt.

Bei einer weiteren vorteilhaften Ausführungsform weist die Blasformanordnung einen Sicherungsmechanismus auf, der ein Schließen der Blasformeinheit bei nicht korrekt arretierter Blasformeinheit verhindert. So wäre es beispielsweise möglich, dass nach einem Einbau einer Blasform vergessen wird, einzelne Sicherungselemente wieder zu verriegeln. Der Sicherungsmechanismus verhindert, dass die Blasformeinheit vollständig geschlossen werden kann, so dass dem Benutzer die Fehlorientierung eines Sicherungselementes auffällt, und er dies nachbessern kann.

Bei einer weiteren vorteilhaften Ausführungsform weist die Blasformanordnung wenigstens zwei Betätigungselemente auf, und jedes dieser Betätigungselemente weist wiederum jeweils einen Vorsprung und eine Ausnehmung auf, wobei in einem geschlossenen Zustand der Blasformeinheit wenigstens ein Vorsprung eines Betätigungselementes in die Ausnehmung des anderen Betätigungselementes eingreift. Bevorzugt sind jedoch die Vorsprünge und die Ausnehmungen so angeordnet, dass ein derartiger wechselseitiger Eingriff lediglich erfolgt, wenn beide Sicherungseinrichtungen korrekt angezogen sind und ansonsten sich beispielsweise die beiden Vorsprünge kontaktieren und auf diese Weise ein Schließen der Blasformeinheit verhindert wird.

Bei einer weiteren Ausführungsform weist die Blasformanordnung wenigstens eine Flüssigkeitsleitung mit wenigstens einem Zuführanschluss zum Zuführen von Flüssigkeit auf und der Blasformhalter weist wenigstens einen Versorgungsanschluss zum Versorgen der Flüssigkeitsleitung mit Flüssigkeit auf. Der Zuführanschluss ist mit dem Versorgungsanschluss durch einen Verriegelungsvorgang zum Arretieren der Blasformeinheit mit dem Blasformhalter verbindbar.

Bei dieser Ausführungsform wird der Umstand ausgenutzt, dass durch das Arretieren der Blasformeinheit an dem Blasformhalter hohe Kräfte zwischen dem Blasformhalter und der Blasformeinheit aufgebracht werden können. Diese Kräfte können verwendet werden, um Flüssigkeitsverbindungen zwischen diesen beiden Elementen herzustellen. Diese Flüssigkeitsverbindungen dienen bevorzugt zum Temperieren der Blasformeinheit. Auf diese Weise kann auf einen zusätzlichen Arbeitsgang zum Anschließen von Flüssigkeitsleitungen an die Blasform verzichtet werden.

Vorteilhaft werden der Versorgungsanschluss und der Zuführanschluss dichtend bzw. flüssigkeitsdicht miteinander verbunden. Besonders bevorzugt sind zu diesem Zweck aufeinander pressbare Dichtflächen vorgesehen, wobei besonders bevorzugt wenigstens einer dieser Dichtflächen durch ein elastisches Material, wie beispielsweise einen O-Ring, gebildet wird.

Die vorliegende Offenbarung ist weiterhin auf eine Streckblasmaschine mit einer Vielzahl von Blasstationen gerichtet, wobei in den Blasstationen Kunststoffvorformlinge zu Kunststoffbehältnissen umformbar sind. Erfindungsgemäß weist veinigstens eine dieser Blasstationen eine Blasformanordnung gemäß Anspruch 1 auf.

Weitere Vorteile und Ausführungsformen ergeben sich aus den beigefügten Zeichnungen. Darin zeigen:
- Fig. 1a - 1f: eine Ausführungsform einer Blasformanordnung nach dem Stand der Technik;
- Fig. 2: eine Darstellung eines Teils einer erfindungsgemäßen Blasformanordnung;
- Fig. 3: eine Detaildarstellung der in Fig. 2 gezeigten Blasformanordnung;
- Fig. 4: eine Seitenansicht einer Verriegelungseinrichtung für die Blasformanordnung aus Fig. 3;
- Fig. 5: eine Schnittdarstellung der in Fig. 4 gezeigten Verriegelungsanordnung;
- Fig. 6: eine perspektivische Ansicht der Verriegelungsanordnung aus Fig. 4;
- Fig. 7: eine Ansicht von unten auf die Verriegelungsanordnung aus Fig. 4; und
- Fig. 8a-b: zwei weitere Ansichten der Verriegelungsanordnung.

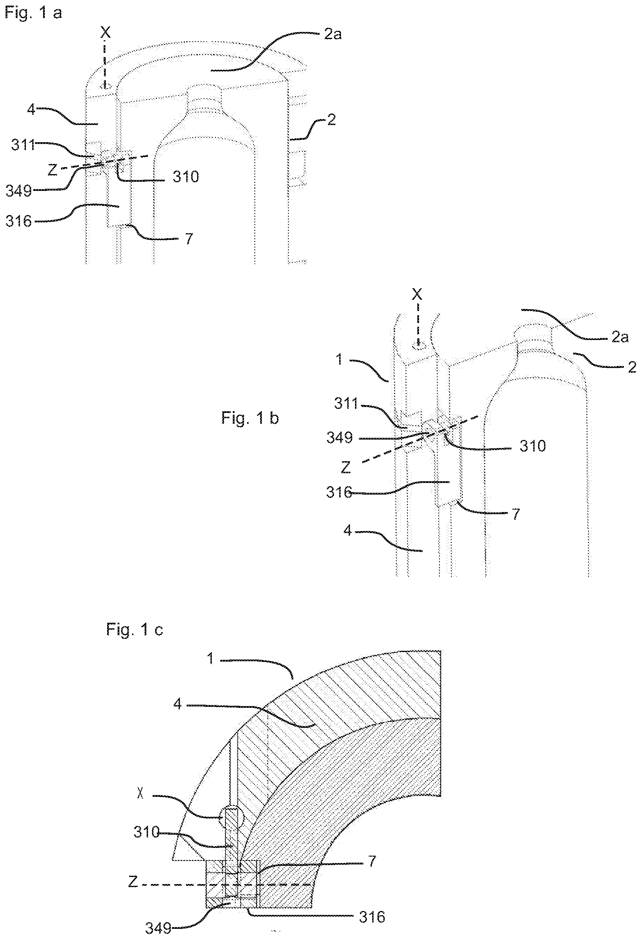

Die Fig. 1a - 1f zeigen eine Ausführungsform einer Blasformanordnung nach der bisher noch unveröffentlichten DE 10 2009 019 845.8. Der Inhalt dieser Patentanmeldung wird hiermit durch Bezugnahme auch vollständig zum Gegenstand der vorliegenden Anmeldung gemacht.

Bei der Blasformanordnung 1 ist jede Blasformschale 2a ohne die Verwendung eines zusätzlichen Werkzeuges mittels eines Exzenter-Schnellspannelements 316 auswechselbar. Fig. 1b zeigt eine weitere perspektivische Ansicht dieser Blasformanordnung 1. Das Exzenter-Schnellspannelement 316 ist in einer Ausnehmung 7 der Blasform 2 bzw. der Blasformhälfte 2a versenkt angeordnet, so dass eine zweite Blasformhälfte 2a bündig angelegt und die gesamte Blasformanordnung 1 geschlossen werden kann.

Fig. 1c zeigt, dass zur mechanischen Arretierung der Blasformhälfte 2a gegenüber der Blasformschale 4 das Exzenter-Schnellspannelement 316 mit einem Bolzen 349 und einer Zugstange 310 versehen ist, welche mit einer Achse bzw. Welle X der Blasformschale 4 schwenkbar verbunden ist.

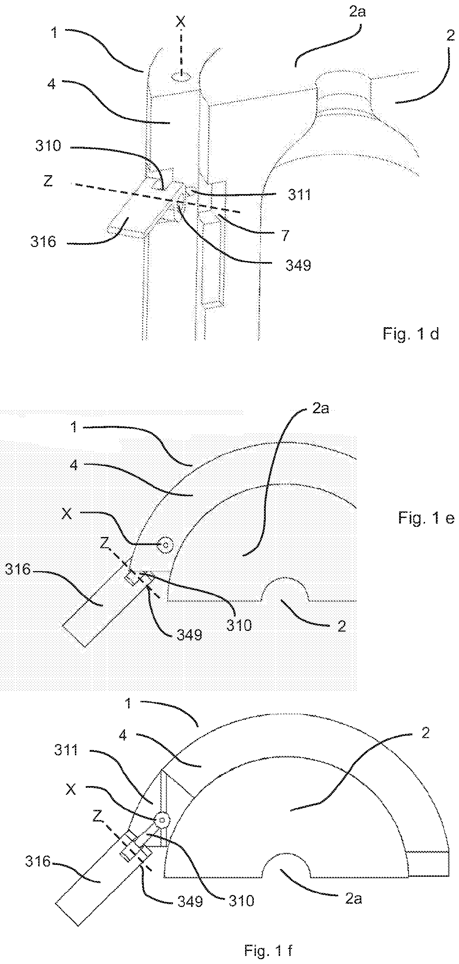

Das Exzenter-Schnellspannelement 316 ist beweglich um die Achse Z ausgeführt und kann zur Demontage bzw. zur Entriegelung der Blasform von einer senkrechten Schließ- zu einer horizontalen Öffnungs-Position um die Achse Z hochgeklappt werden (Fig. 1d). Damit die Blasform zum Auswechseln freigegeben werden kann, lässt sich das Exzenter-Schnellspannelement 316, wie in Fig. 1e gezeigt, um eine Achse X schwenken. Hierzu ist die Blasformhälfte 2a mit einer horizontalen Ausfräsung 311 versehen. Fig. 1f. zeigt in einem Horizontalschnitt durch die Ausfräsung 311 die Anordnung der Zugstange 310, welche mittels des Bolzens 349 an der Achse Z des Exzenter-Schnellspannelements 316 sowie mit der Achse X in der Blasformschale 4 verbunden ist.

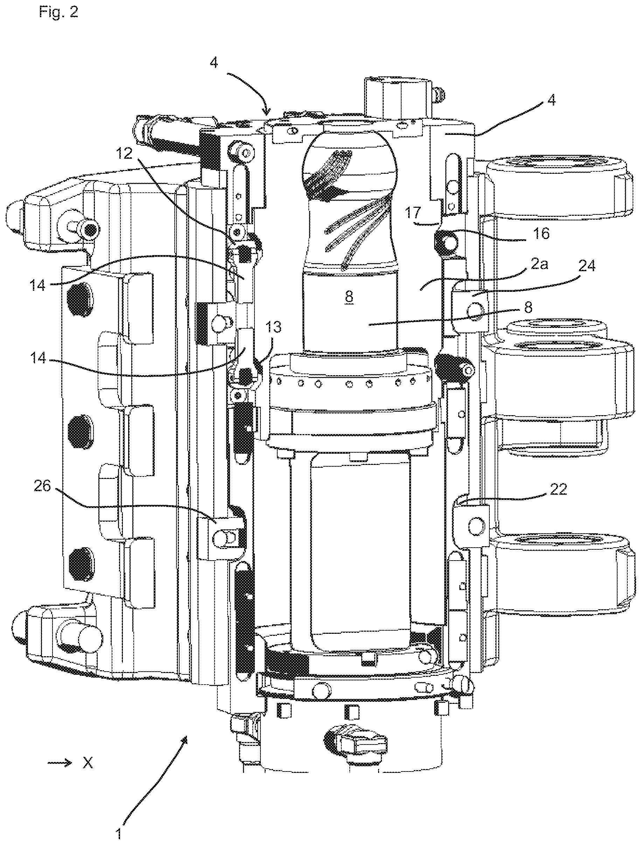

Fig. 2 zeigt eine erfindungsgemäße Blasformanordnung 1. Dabei ist hier ein Formhalterelement 4a dargestellt, welches gemeinsam mit einem weiteren Formhalterelement Teil eines Formhalters 4 ist. An diesem Formhalterelement 4a ist hier ein Teil 2a einer Blasformeinheit dargestellt. Bei der in Fig. 2 gezeigten Situation ist das Blasformteil 2a an dem Formhalterelement 4a angeordnet bzw. gegenüber diesem arretiert. Das Bezugszeichen 16 bezieht sich auf Eingriffselemente, die hier fest an dem Formhalterelement 4a angeordnet sind und in eine entsprechende Ausnehmung 17, die in dem Blasformteil 2a vorgesehen sind, eingreifen.

In ihrem Inneren bildet das Blasformelement 2a einen Hohlraum 8 aus, innerhalb dessen Behältnisse blasgeformt werden können.

Das Bezugszeichen 26 bezieht sich auf ein weiteres Halterungselement, um den Blasformhalter 4 an einem Träger zu haltern. Dabei greift dieses Eingriffselement 26 in eine Ausnehmung 22 des Blasformhalters 4 ein.

Das Bezugszeichen 14 bezieht sich auf ein Betätigungselement, welches hier nach außen hochgeklappt werden kann, um das Blasformteil 2a von einem Blasformhalterelement 4a zu trennen. Das Bezugszeichen 12 kennzeichnet ein Eingriffselement, welches in eine entsprechende Ausnehmung 13, welche in dem Blasformelement 2a angeordnet ist, eingreifen kann. In geschlossenem Zustand weisen die beiden Betätigungselemente (bzgl. deren Schwenkachse) aufeinander zu, wodurch eine Platzeinsparung der gesamten Anordnung erreicht werden kann. Daneben kann der Benutzer zum Entriegeln beide Betätigungselemente bzw. deren Hebel gleichzeitig lösen. Grundsätzlich ist es aber auch denkbar, die beiden Betätigungselemente voneinander weg zeigend anzuordnen, d. h. die in Fig. 2 gezeigten Betätigungselemente 14 um 180° gedreht vorzusehen (nicht dargestellt).

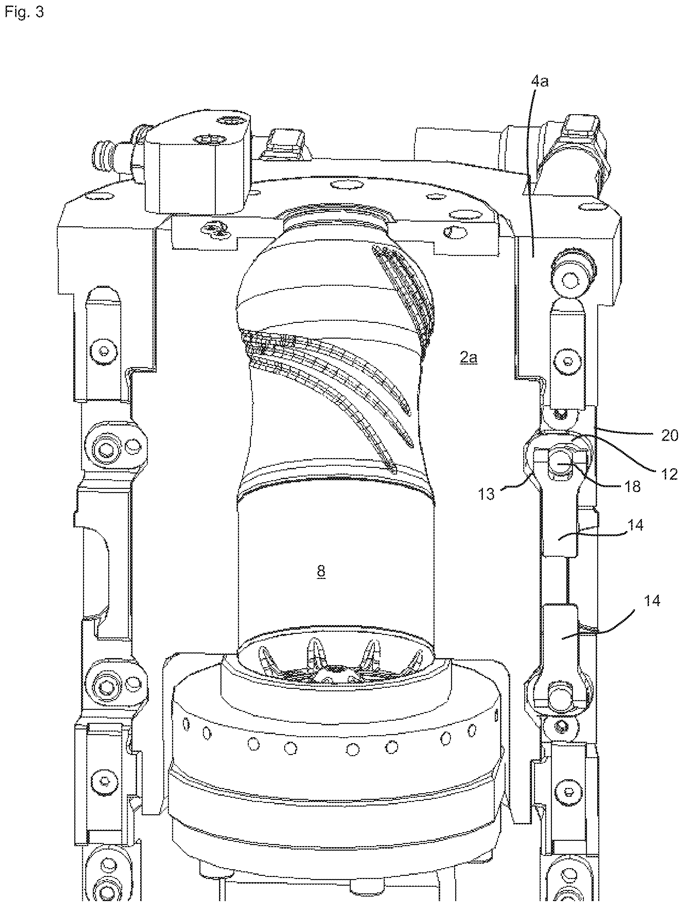

Fig. 3 zeigt eine Teildarstellung der in Fig. 2 gezeigten Anordnung. Man erkennt hier wiederum die Ausnehmung 13, in welche das Eingriffselement 12 eingreift. Das Eingriffselement, sowie auch das Betätigungselement 14 sind hier an einem Träger 20 angeordnet, wobei dieser Träger 20 fest an dem Formhalterelement 4a angeordnet ist.

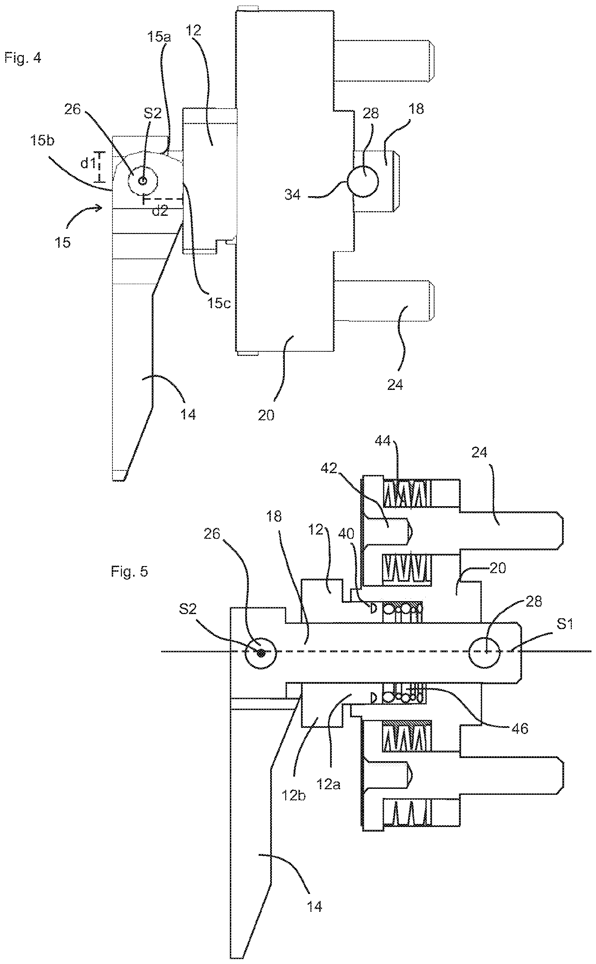

Fig. 4 zeigt zur Veranschaulichung ein erfindungsgemäßes Verriegelungselement. Man erkennt, dass hier das Betätigungselement 14 als Hebel ausgeführt ist, welcher hier gegenüber einer Schwenkachse S2 schwenkbar angeordnet ist. Zu diesem Zweck ist ein Schwenkbolzen 26 an einer Zugstange 18 angeordnet. Man erkennt, dass das Betätigungselement 14 ein exzentrisch ausgebildetes Schwenkteil 15 aufweist, (d.h. der Abstand d1 zwischen der Schwenkachse S2 und dem Außenumfang des Schwenkteils, der in einem geschlossenen Zustand des Betätigungshebel wirkt und der Abstand d2 zwischen der Schwenkachse S2 und dem Außenumfang des Schwenkteils, der in einem geöffneten Zustand des Betätigungselements wirkt, unterscheiden sich) sodass durch eine Schwenkung des Betätigungselements 14 um die Achse X beispielsweise hier um 90° im Uhrzeigersinn das Eingriffselement gelockert werden kann.

Man erkennt außerdem, dass der Außenumfang des Schwenkteils 15 einen gekrümmten Abschnitt 15a sowie zwei gerade Abschnitte 15b, 15c, wobei diese geraden Abschnitte 15b, 15c bevorzugt über einen Knick in den gekrümmten Abschnitt 15a übergehen. Durch diese Ausgestaltung kann erreicht werden, dass das Betätigungselement 14 in einem gelösten Zustand durch die Kraft der Federeinrichtung 46 derart gedrängt wird, dass er sich in Richtung des Zugmittels 18 erstreckt, wodurch die Montage bzw. Demontage der Blasform weiter erleichtert wird.

Das Bezugszeichen 20 kennzeichnet wiederum einen Träger, an dem beispielsweise das Betätigungselement angeordnet ist. Das Bezugszeichen 28 kennzeichnet einen Eingriffsbolzen, der einerseits an dem Zugmittel 18 angeordnet ist und andererseits in die Ausnehmung 34 eingreift. Mittels Führungsstiften 24 ist der Träger 20, wie oben erwähnt, an dem Formhalterelement 4a angeordnet.

Fig. 5 zeigt eine Schnittdarstellung der in Fig. 4 gezeigten Verriegelungseinrichtung. Der Träger 20 bzw. die Aufnahme 20 ist mittels Führungsstiften 24 an dem Formträger bzw. der Mutterform befestigt. Die Führungsstifte 24 (die auch als einschraubbare Bolzen ausgestaltet sein können) erlauben dabei eine horizontale Bewegung der Aufnahme bzw. des Trägers gegen die Federungseinrichtungen bzw. Tellerfederpakete 44.

In einem geschlossenen bzw. arretierten Zustand der Blasform (die Blasform wird hier fest an dem Träger gehalten) liegt das Betätigungselement 14 bzw. der Hebel in vertikaler Lage, die Spannpratze d.h. das Eingriffselement 12 liegt auf der Blasform auf und der Träger 20 ist abgehoben von der Auflagefläche und erzeugt durch die Federungseinrichtungen 44 über das Eingriffselement 12 eine Kraft auf die Blasform, welche diese fest im Formträger bzw. der Mutterform hält. Die hier erwähnten geometrischen Angaben wie horizontale Bewegung und vertikale Lage werden jeweils unter Bezugnahme auf die Einbausituation der Blasform verstanden, wie sie etwa in Fig. 2 dargestellt ist.

Zum Öffnen des Schnellverschlusses beim Wechseln der Blasformen wird das Betätigungselement 14 bzw. der Hebel um 90° in die Horizontale gedreht. Durch die oben beschriebene exzentrische Ausformung des Hebels 14 wird dabei das System entspannt, der Träger 20 liegt wieder auf der Auflagefläche im Formträger auf, und das Eingriffselement hebt sich von der Blasform 2 bzw. dem Blasformteil 2a ab. Diese Bewegung des Eingriffselements 12 weg von der Blasform wird durch ein Federelement 46 unterstützt.

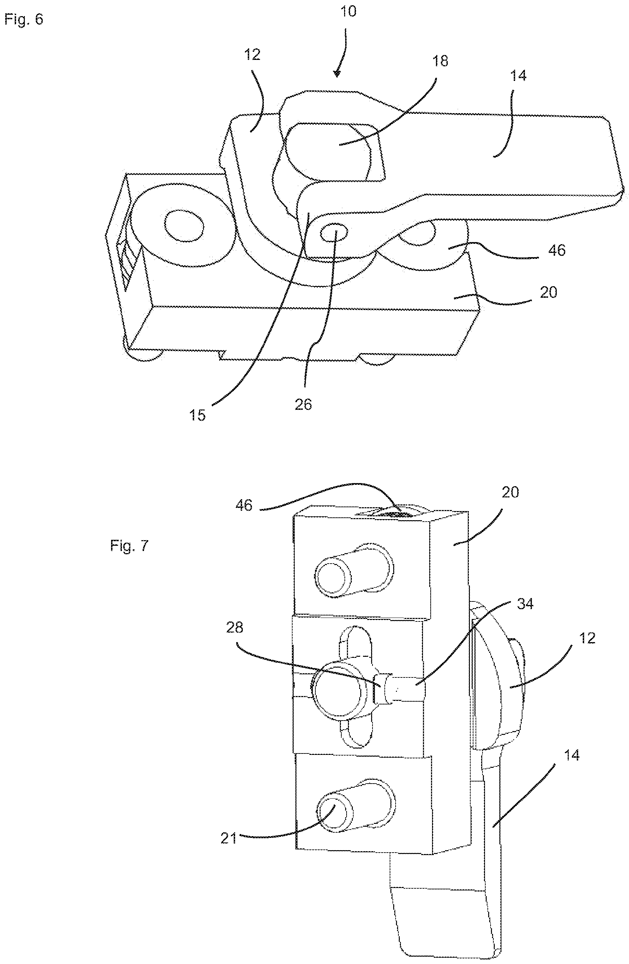

Im geöffneten Zustand kann das Betätigungselement 14 bzw. der Hebel dann um 90° (bzgl. der Schwenkachse S1) gedreht werden. Hierdurch wird mittels eines Formschlusses zwischen dem Eingriffselement 12 und dem Zugmittel 18 auch das Eingriffselement 12 weggeschwenkt. Der weitere Schwenkbolzen 28 rastet in die Ausnehmung bzw. Nut 34 ein (vgl. Fig. 7). Diese Position wird wiederum durch das Federelement 46 gehalten, so dass während des Wechselns der Blasform keine unbeabsichtigte Bewegung des Eingriffselements 12 erfolgen kann, welche das Aus- und Einbauen der Blasform behindern könnte.

Zum Schließen wird das Betätigungselement 14 und somit auch das Eingriffsmittel um 90° bezüglich der Achse S1 gedreht und das System durch Schwenken des Betätigungselements 14 um die Achse S2 in die vertikale Position gespannt.

Man erkennt in Fig. 5, dass das Eingriffselement 12 einen Grundkörper 12a aufweist, der in einer entsprechenden Ausnehmung 40 des Trägers 20 angeordnet ist. Das Bezugszeichen 46 bezieht sich auf ein Federelement, welches den Eingriffskörper 12 hier nach oben, d. h. in Richtung des Betätigungselements 14, vorspannt. Nach einem Lösen des Betätigungselements, d. h. hier einem Schwenken im Uhrzeigersinn um 90°, kann sich das Eingriffselement 12 aufgrund der Federkraft der Feder 46 nach oben bewegen, und auf diese Weise die Blasform lösen. Dabei wäre es möglich, dass der Grundkörper 12a einen kreisförmigen Querschnitt aufweist und die Ausnehmung 40 ebenfalls einen kreisförmigen Querschnitt aufweist. Es wäre jedoch auch möglich, dass der Grundkörper 12a einen von einem kreisförmigen Querschnitt abweichenden Querschnitt aufweist und erst dann bezüglich der Achse S1 drehbar wird, wenn der Grundkörper 12a vollständig aus der Ausnehmung 40 herausgetreten ist. Über die Federeinrichtung 46 ist es, wie oben gesagt, auch möglich, den Träger 20 gegenüber dem Formträgerelement 20 federnd zu haltern.

Fig. 6 zeigt eine weitere perspektivische Ansicht des Verriegelungsmechanismus 10. Auch hier erkennt man wieder den Betätigungshebel, der gegenüber der Zugstange 18 schwenkbar angeordnet ist. Außen wiederum sind die Verschraubungen 46 zu erkennen, mit denen der Träger 20 an dem Formträgerelement angeordnet werden kann.

Fig. 7 zeigt eine weitere perspektivische Darstellung der Vorrichtung, wobei hier auch wieder der Bolzen 28 erkennbar ist, der (auch in einem geschlossenen Zustand der Blasform) in die Ausnehmung 34 eingreift. In einem gelösten Zustand des Betätigungselements 14 wird der Bolzen 28 aus dem Eingriff mit der Ausnehmung 34 gelockert und auf diese Weise ist es möglich, dass das Betätigungselement bezüglich der oben erwähnten Achse X geschwenkt wird, wobei hier gleichzeitig auch das Eingriffselement 12 mit geschwenkt wird. Über die in Fig. 5 gezeigte Feder 46 kann das Eingriffselement 12 stets an das Betätigungselement 14 angedrückt werden, sodass eine gemeinsame Drehbewegung zwischen beiden Elementen stattfinden kann.

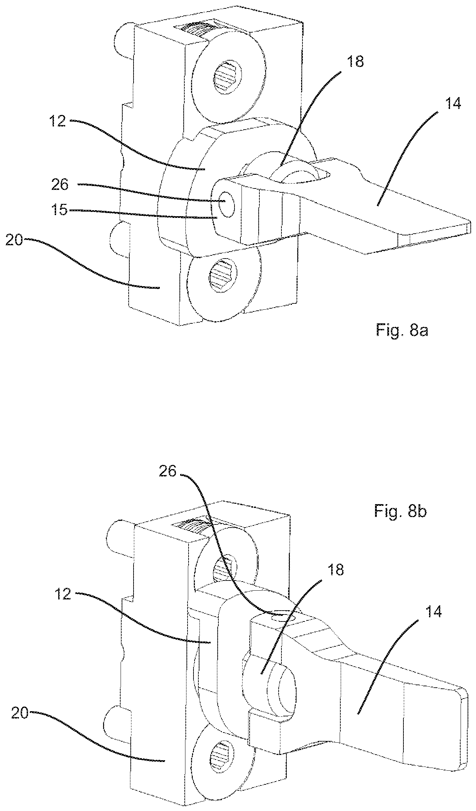

Die Figuren 8a und 8b zeigen eine weitere Darstellung der Verriegelungsanordnung, wobei hier das Betätigungselement 14 in einer geöffneten Stellung angeordnet ist. In dieser Position des Betätigungselements 14 kann das Eingriffselement 12 gedreht bzw. geschwenkt werden. In Fig. 8a ist das Eingriffselement in einer Lage, in der es in die Blasform eingreift und in Fig. 8b in einer Lage, in der die Blasform freigegeben ist.

### Bezugszeichenliste

- 1: Blasformanordnung
- 2: Blasform
- 2a: Teil einer Blasform 2/Blasform/Teil einer Blasformeinheit
- 4: Blasformschale, Formhalter
- 4a: Hälfte einer Blasformschale 4/Formträger/Mutterform/Formhalterelement
- 7: Ausnehmung
- 8: Hohlraum
- 9: Formträger
- 10: Verriegelungsmechanismus
- 11: Unterer Bereich der Blasformschale
- 12: Eingriffselement
- 12a: Grundkörper
- 13: Mutterform/Ausnehmung
- 14: Betätigungselement
- 15: Schwenkteil
- 15a: gekrümmter Abschnitt
- 15b, 15c: gerade Abschnitte
- 16: Nut/Eingriffselemente
- 17: Ausnehmung
- 18: Zugstange/Zugmittel
- 19: Öffnung für Bolzen
- 20: Träger/Formträgerelement
- 22: Ausnehmung
- 24: Führungsstifte
- 26: weiteres Halterungselement/Schwenkbolzen
- 28: Eingriffsbolzen
- 34: Ausnehmung
- 40: Ausnehmung
- 42: Verschraubungen
- 46: Federelement
- 214: Betätigungsmittel (Schraube)
- 310: Zugstange
- 311: Ausfräsung
- 312: Federndes Eingriffselement
- 314: Ausnehmung
- 315: Hebelförmiges Betätigungselement
- 316: Exzenter-Schnellspannelement
- 349: Bolzen
- L: Längsrichtung
- T: Richtung
- E: Ebene
- P1: Pfeil
- R: Richtung
- X: Schwenkachse
- Z: Achse
- S1,S2: Schwenkachsen
- d1, d2: Abstände

## Patentansprüche

1. Blasformanordnung (1) zum Umformen von Kunststoffvorformlingen zu Kunststoffbehältnissen mit einer Blasformeinheit (2), welche einen Hohlraum (8) ausbildet, innerhalb dessen die Kunststoffvorformlinge zu Kunststoffbehältnissen expandierbar sind, wobei die Blasformeinheit (2) wenigstens zweiteilig ausgebildet ist, und mit einem Blasformhalter (4) zur Aufnahme der Blasformeinheit, wobei der Blasformhalter (4) wenigstens zwei Formhalterelemente (4a, 4b) zur Aufnahme von Teilen (2a, 2b) der Blasformeinheit (2) aufweist, und mit einem Verriegelungsmechanismus (10), um wenigstens einen Teil (2a) der Blasformeinheit (2) gegenüber wenigstens einem Formhalterelement (4a) zu arretieren, wobei der Verriegelungsmechanismus (10) ein Eingriffselement (12) aufweist, welches in einem arretierten Zustand des Teils (2a) der Blasformeinheit (2) gegenüber einem Formhalterelement (4a) auf einen Abschnitt des Teils (2a) der Blasformeinheit (2) eine Kraft zum Halten des Teils (2a) der Blasformeinheit gegenüber dem Formhalterelement (4a) ausübt, wobei der Verriegelungsmechanismus (10) ein Betätigungselement (14) aufweist, um eine Arretierung zwischen dem Formhalterelement (4a) und dem Teil (2a) der Blasformeinheit (2) zu lösen
**dadurch gekennzeichnet, dass**
eine Lage des Eingriffselements (12) in einer ersten Stellung des Betätigungselements (14) arretiert ist und dass die Lage des Eingriffselements in einer zweiten Stellung des Betätigungselements (14) änderbar ist, und wobei das Eingriffselement (12) zwischen dem Betätigungselement (14) und der Blasformeinheit (2) angeordnet ist.

2. Blasformanordnung nach Anspruch 1,
**dadurch gekennzeichnet, dass**
in der zweiten Stellung des Betätigungselements (14) die Blasformeinheit (2) von dem Formhalterelement (4a, 4b) lösbar ist.

3. Blasformanordnung nach wenigstens einem der vorangegangenen Ansprüche,
**dadurch gekennzeichnet, dass**
das Eingriffselement (12) und das Betätigungselement (14) zwei verschiedene Teile sind.

4. Blasformanordnung nach wenigstens einem der vorangegangenen Ansprüche,
**dadurch gekennzeichnet, dass**
das Eingriffselement (12) bezüglich einer vorgegebenen Schwenkachse (S1) drehbar ist.

5. Blasformanordnung nach wenigstens einem der vorangegangenen Ansprüche,
**dadurch gekennzeichnet, dass**
das Eingriffselement (12) in der zweiten Stellung des Betätigungselements (14) gemeinsam mit diesem schwenkbar ist.

6. Blasformanordnung nach wenigstens einem der vorangegangenen Ansprüche,
**dadurch gekennzeichnet, dass**
das Betätigungselement (14) um eine vorgegebene Schwenkachse (S2) schwenkbar ist.

7. Blasformanordnung (1) nach wenigstens einem der vorangegangenen Ansprüche,
**dadurch gekennzeichnet, dass**
das Eingriffselement (12) an einem Träger (20) angeordnet ist und dieser Träger (20) an dem Blasformhalter (4) angeordnet ist.

8. Blasformanordnung (1) nach wenigstens einem der vorangegangenen Ansprüche
**dadurch gekennzeichnet, dass**
das Betätigungselement (12) einen exzentrisch ausgebildeten Kontaktabschnitt (15a, 15b, 15c) aufweist.

9. Blasformanordnung (1) nach wenigstens einem der vorangegangenen Ansprüche
**dadurch gekennzeichnet, dass**
die Blasformanordnung eine Federeinrichtung (46) aufweist, um das Eingriffselement (12) gegenüber dem Träger (20) vorzuspannen,

10. Streckblasmaschine mit einer Vielzahl von Blasstationen, in denen Kunststoffvorformlinge zu Kunststoffbehältnissen umformbar sind, wobei wenigstens eine dieser Blasstationen eine Blasformanordnung (1) nach weinigstens einem der vorangegangenen Ansprüche aufweist.

## Claims

1. A blow mould assembly (1) for moulding plastic preforms into plastic containers, comprising a blow mould unit (2) forming a cavity (8), within which the plastic preforms can be expanded into plastic containers, said blow mould unit (2) being of a design that consists of at least two parts, and including a blow mould holder (4) for receiving the blow mould unit, said blow mould holder (4) including at least two mould holder elements (4a, 4b) for receiving parts (2a, 2b) of the blow mould unit (2), and including a locking mechanism (10) in order to arrest at least one part (2a) of the blow mould unit (2) with respect to at least one mould holder element (4a), with the locking mechanism (10) including an engagement member (12) that exerts a force, in a latched condition of the part (2a) of the blow mould unit (2) with respect to a mould holder element (4a), onto a section of the part (2a) of the blow mould unit (2), said force being for holding the part (2a) of the blow mould unit relative to the mould holder element (4), said locking mechanism (10) having an actuating member (14) in order to release a latching engagement between the mould holder element (4a) and the part (2a) of the blow mould unit (2),
**characterised in that**
an orientation of the engagement member (12) is latched in a first position of the actuating member (14), and **in that** the orientation of the engagement member can be changed in a second position of the actuating member (14) and wherein the engaging element (12) is disposed between the actuating element (14) and the blow mould unit (2).

2. The blow mould assembly according to claim 1,
**characterised in that**
in the second position of the actuating member (14), the blow mould unit (2) can be detached from the mould holder element (4a, 4b).

3. The blow mould assembly according to at least one of the preceding claims,
**characterised in that**
the engagement member (12) and the actuating member (14) are two separate components.

4. The blow mould assembly according to at least one of the preceding claims,
**characterised in that**
the engagement member (12) can be rotated with respect to a predetermined pivot axis (S1).

5. The blow mould assembly according to at least one of the preceding claims,
**characterised in that**
the engagement member (12) can be pivoted in the second position of the actuating member (14) together with the latter.

6. The blow mould assembly according to at least one of the preceding claims,
**characterised in that**
the actuating member (14) is pivotable about a predefined pivot axis (S2).

7. The blow mould assembly (1) according to at least one of the preceding claims,
**characterised in that**
the engagement member (12) is disposed on a carrier (20) and that this carrier (20) is disposed on the blow mould holder (4).

8. The blow mould assembly (1) according to at least one of the preceding claims,
**characterised in that**
the actuating member (12) includes an eccentrically formed contact section (15a, 15b, 15c).

9. The blow mould assembly (1) according to at least one of the preceding claims,
**characterised in that**
the blow mould assembly includes spring means (46) in order to pretension the engagement member (12) relative to the carrier (20).

10. A stretch blow moulding machine comprising a plurality of blow stations, in which plastic preforms can be moulded into plastic containers, wherein at least one of these blow stations includes a blow mould assembly (1) according to at least one of the preceding claims.

## Revendications

1. Ensemble moule de soufflage (1) servant à transformer des ébauches en matière plastique en récipients en matière plastique, comprenant une unité moule de soufflage (2), laquelle constituant une cavité (8) à l'intérieur de laquelle les ébauches en matière plastique pouvant être expansées pour former des récipients en matière plastique, dans lequel l'unité moule de soufflage (2) comprenant au moins deux parties, et un support de moule de soufflage (4) destiné à recevoir l'unité moule de soufflage, dans lequel le support de moule de soufflage (4) comprenant au moins deux éléments de support de moule (4a, 4b) destinés à recevoir des parties (2a, 2b) de l'unité moule de soufflage (2), et un mécanisme de verrouillage (10), afin de bloquer au moins une partie (2a) de l'unité moule de soufflage (2) par rapport à au moins un élément de support de moule (4a), dans lequel le mécanisme de verrouillage (10) comprenant un élément d'appui (12) qui, lorsque la partie (2a) de l'unité moule de soufflage (2) se trouve dans un état bloqué par rapport à un élément de support de moule (4a), exerce sur un segment de la partie (2a) de l'unité moule de soufflage (2) une force destinée à retenir la partie (2a) de l'unité moule de soufflage par rapport à l'élément de support de moule (4a), dans lequel le mécanisme de verrouillage (10) comprenant un élément d'actionnement (14) servant à supprimer un blocage entre l'élément de support de moule (4a) et la partie (2a) de l'unité moule de soufflage (2),
**caractérisé en ce que**
une orientation de l'élément d'appui (12) est bloquée lorsque l'élément d'actionnement (14) se trouve dans une première position et **en ce que** l'orientation de l'élément d'appui, lorsque l'élément d'actionnement (14) se trouve dans une deuxième position, peut être modifiée, et dans lequel l'élément d'appui (12) est agencé entre l'élément d'actionnement (14) et l'unité moule de soufflage (2).

2. Ensemble moule de soufflage selon la revendication 1,
**caractérisé en ce que**
lorsque l'élément d'actionnement (14) se trouve dans la deuxième position, l'unité moule de soufflage (2) peut être détachée de l'élément de support de moule (4a, 4b).

3. Ensemble moule de soufflage selon au moins l'une des revendications précédentes,
**caractérisé en ce que**
l'élément d'appui (12) et l'élément d'actionnement (14) sont deux parties différentes.

4. Ensemble moule de soufflage selon au moins l'une des revendications précédentes,
**caractérisé en ce que**
l'élément d'appui (12) est en rotation par rapport à un axe de pivotement (S1) prédéfini.

5. Ensemble moule de soufflage selon au moins l'une des revendications précédentes,
**caractérisé en ce que**
l'élément d'appui (12), lorsque l'élément d'actionnement (14) se trouve dans la deuxième position, pivote conjointement avec celui-ci.

6. Ensemble moule de soufflage selon au moins l'une des revendications précédentes,
**caractérisé en ce que**
l'élément d'actionnement (14) est pivotable autour d'un axe de pivotement (S2) prédéfini.

7. Ensemble moule de soufflage (1) selon au moins l'une des revendications précédentes,
**caractérisé en ce que**
l'élément d'appui (12) est agencé sur un support (20) et ce support (20) est agencé sur le support de moule de soufflage (4).

8. Ensemble moule de soufflage (1) selon au moins l'une des revendications précédentes,
**caractérisé en ce que**
l'élément d'actionnement (12) comprend un segment de contact (15a, 15b, 15c) formé de façon excentrique.

9. Ensemble moule de soufflage (1) selon au moins l'une des revendications précédentes,
**caractérisé en ce que**
l'ensemble moule de soufflage comprend un dispositif à ressort (46) afin de pré-contraindre l'élément d'appui (12) par rapport au support (20).

10. Machine d'étirage-soufflage comprenant une pluralité de stations de soufflage, dans lesquelles des ébauches en matière plastique peuvent être transformées en récipients en matière plastique, dans laquelle au moins l'une de ces stations de soufflage comprend un ensemble moule de soufflage (1) selon au moins l'une des revendications précédentes.
